# FASCICULE DE BREVET EUROPEEN

(11) **EP 2 739 027 B1**
(45) Date de publication et mention de la délivrance du brevet: **24.08.2016**
(21) Numéro de dépôt: 13195389.5
(22) Date de dépôt: 02.12.2013
(51) Int. Cl.: H04M 7/00, H04M 3/533

(54) **Procédé de dépôt d'un message vocal auprès d'un serveur de messagerie vocale, serveur de messagerie vocale et programme d'ordinateur correspondants**
Verfahren zum Hinterlassen einer Voice-Mail auf einem Voice-Mail-Server, entsprechender Voice-Mail-Sever und entsprechendes Computerprogramm
Method for leaving a voice message on a voicemail server, corresponding voicemail server and computer program

(30) Priorité: 30.11.2012 FR 1261505
(43) Date de publication de la demande: 04.06.2014
(73) Titulaire: Orange, 75015 Paris (FR)
(72) Inventeur: Nagle, Arnault, 22300 Lannion (FR); Deleam, David, 22700 Perros Guirec (FR); Le Solliec, Jean-Marc, 22300 Lannion (FR)

(56) Documents cités:
- EP-A2- 2 071 897
- WO-A1-2005/112412

## Description

### Domaine de l'invention

La présente invention se rapporte de manière générale au domaine du dépôt de messages vocaux auprès d'un serveur de messagerie vocale par un terminal audio d'un utilisateur souhaitant déposer des messages vocaux à l'intention d'un utilisateur abonné audit serveur de messagerie vocale. La présente invention concerne également la consultation de tels messages par un terminal dudit utilisateur abonné.

### Arrière-plan de l'invention

Au cours de ses évolutions, la qualité audio intrinsèque des communications vocales est demeurée la même. Le spectre de fréquences vocales transmises sur les réseaux est en effet resté limité à une bande de fréquence étroite [300 Hz, 3400 Hz], appelée également bande NB (abréviation anglaise de « NarrowBand »). Cette limitation formalisée au début de la téléphonie analogique était justifiée par les contraintes techniques du moment. Une telle bande de fréquence étroite est suffisante pour comprendre un interlocuteur distant, au moins en absence de perturbations. Mais elle est très loin de reproduire le spectre de la parole humaine compris dans la bande de fréquence [50 Hz, 20 000 Hz] et altère par conséquent la qualité et la fidélité des voix.

La technologie de la Voix Haute Définition («Voix HD ») permet de communiquer dans la bande de fréquence [50 Hz, 7000 Hz] qui est plus large que la bande de fréquence étroite. Une telle bande de fréquence est appelée bande élargie ou également bande WB (abréviation anglaise de « WideBand »). Elle vise à fournir une meilleure qualité et un meilleur confort d'écoute.

Ses avantages pour les usagers sont :
- d'une part d'ordre fonctionnel, l'élargissement de la bande de fréquence accroissant l'intelligibilité, le confort d'écoute favorisant les conversations longues,
- mais également d'ordre émotionnel, le rendu de la majeure partie du spectre de parole assurant la fidélité de la voix et une véritable sensation de présence.

La Voix HD requiert une chaîne de communication compatible de bout en bout, c'est-à-dire du microphone à l'écouteur du terminal distant. Elle s'appuie sur des formats de codage qui garantissent la qualité bande élargie et qui, étant normalisés, assurent l'interopérabilité entre les différents éléments de la chaîne. Dans l'industrie des télécommunications, deux formats de codage WB sont principalement employés : le codeur G.722 http://www.itu.int/rec/T-REC-G.722/f. pour les communications en bande élargie sur réseaux fixes et le codeur AMR-WB 3GPP TS 26.190 pour celles sur réseaux mobiles.

Schématiquement, la mise en oeuvre de la Voix HD nécessite :
- un réseau de télécommunication compatible avec les codeurs audio WB - autrement dit transparent à de tels formats de codage,
- des terminaux audio qui embarquent chacun au moins un codeur WB, qui inter-opèrent avec le réseau de télécommunication précité et dont les caractéristiques acoustiques préservent la qualité de la Voix HD.

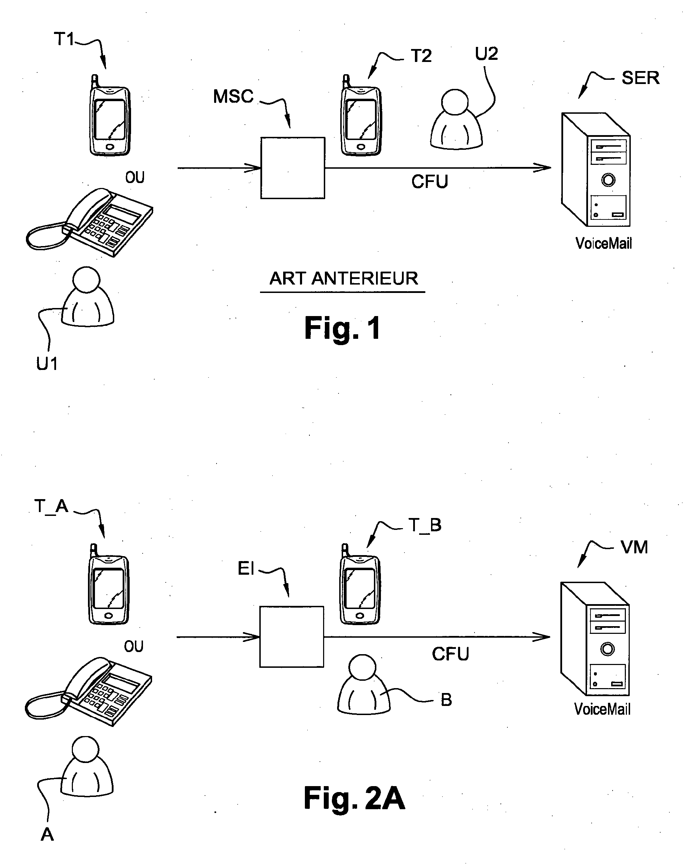

La **figure 1** illustre un système classique de dépôt de messages vocaux auprès d'un serveur de messagerie vocale, dans lequel est mise en oeuvre la Voix HD.

Un tel système de dépôt comprend :
- un premier terminal audio T1, de type mobile ou fixe par exemple, appartenant à un utilisateur U1,
- un deuxième terminal audio T2, de type mobile ou fixe par exemple, appartenant à un utilisateur U2,
- un équipement destiné au routage dans le réseau de télécommunication, à l'interconnexion avec les autres réseaux et à la coordination des appels, par exemple de type MSC (abréviation anglaise de « Mobile Switching Center) dans le cas d'un réseau mobile,
- un serveur de messagerie vocale SER destiné à recevoir des messages vocaux, en particulier en provenance du premier terminal audio T1 de l'utilisateur U1, et auprès duquel l'utilisateur U2 peut consulter les messages vocaux déposés, par exemple à l'aide de son terminal audio T2.Les terminaux T1 et T2, l'équipement MSC et le serveur de messagerie vocale comprennent chacun des interfaces de communication (non représentées sur la **figure 1**) qui permettent de réaliser la négociation d'un codeur WB ou NB selon le cas, et de transporter les trames audio associées.

On suppose dans l'exemple représenté que le terminal T1 est de type WB ou HD. A cet effet, le terminal T1 comprend :
- au moins un codeur WB ou HD, tel que par exemple un codeur AMR-WB (abréviation anglaise de « Adaptive Multi-Rate - Wideband »),
- et au moins un codeur NB.

On suppose dans l'exemple représenté que le serveur de messagerie vocale SER est de type WB ou HD et comprend au moins un codeur WB ou HD et au moins un codeur NB.

On suppose dans l'exemple représenté que :
- le protocole de signalisation entre l'équipement destiné aux routages et le serveur de messagerie vocale SER est SIP (standard RFC 3261),
- et que les interfaces de communication dudit équipement et dudit serveur sont de type IP, ce qui permet de transporter des paquets RTP (abréviation anglaise de Real-time Transfert Protocole) incluant les trames audio AMR-WB conformes au standard RFC 4867.

Lorsque l'utilisateur U1 dépose un message vocal sur le serveur de messagerie SER au moyen de son terminal T1, le codeur AMR-WB est susceptible d'être négocié de bout en bout, entre le terminal T1 qui comprend un codeur AMR-WB et le serveur de messagerie vocale SER qui stocke le message vocal dans son format natif AMR-WB, selon par exemple le standard RFC 4867.

La sélection du codeur AMR-WB dans le terminal T1 pour se connecter au serveur de messagerie vocale peut être mise en oeuvre dans le cas par exemple où le réseau de télécommunication est un réseau mobile avec renvoi inconditionnel de type CFU (abréviation anglaise de « Call Forwarding Unconditionnal ») activé. Selon cette configuration, les capacités en codec audio du terminal T2 de l'utilisateur U2 ne sont jamais prises en compte par l'équipement intermédiaire MSC.

Selon une autre configuration non représentée sur la **figure 1****,** l'utilisateur qui souhaite déposer un message vocal avec son terminal T1 auprès du serveur de messagerie vocale SER peut contacter directement ce serveur en composant un numéro d'appel associé à ce dernier, puis déposer un message vocal après avoir saisi préalablement le numéro d'appel de l'utilisateur abonné audit serveur.

L'inconvénient d'une telle disposition réside dans le fait que lorsque le terminal T2 de l'utilisateur U2 comprend uniquement un ou plusieurs codeurs NB, le serveur de messagerie vocale SER doit effectuer un transcodage audio du message vocal déposé, c'est-à-dire convertir ce message vocal déposé sous le format AMR-WB en un message vocal qui soit au format NB compatible avec l'un des codeurs NB du terminal T2 de l'utilisateur U2, pour que ce dernier parvienne à consulter ledit message vocal.

Il en résulte, dans le serveur de messagerie vocale, une augmentation non négligeable de la demande en ressources de traitement pour effectuer de tels transcodages supplémentaires. De plus, un transcodage en temps réel AMR-WB/NB, généralement via le codeur pivot G.711, n'est pas sans risque concernant la qualité audio.

Une alternative au transcodage en temps réel est d'effectuer en avance celui-ci. Mais il est peu adapté aux réseaux mobiles pour lesquels il existe de nombreux formats de codage (AMR, AMR WB, GSM EFR, GSM HR, GSM FR...). De plus les formats multi-débits (AMR, AMR-WB, ...) seront préparés par défaut par le serveur de messagerie vocale au débit maximum supporté par ledit serveur. Or dans le réseau mobile, du fait des contraintes radios, les équipements d'accès ou les terminaux mobiles eux-mêmes peuvent demander un débit restreint, rendant inutile le message transcodé au préalable au débit maximum.

Un système de messagerie est également divulgué dans le document WO 2005/112412. Un tel système est conçu pour s'adapter à l'hétérogénéité des terminaux de lecture des messages stockés dans le système. Par contre, un tel système n'est pas conçu pour s'adapter aussi à l'hétérogénéité des terminaux émetteurs des messages.

### Objet et résumé de l'invention

Un des buts de l'invention est de remédier à des inconvénients de l'état des techniques précitées.

A cet effet, un objet de la présente invention concerne un procédé de dépôt de message vocal, par un terminal audio appartenant à un utilisateur souhaitant déposer un message vocal à l'attention d'un autre utilisateur, auprès d'un serveur de messagerie vocale auquel est abonné l'autre utilisateur et comprenant au moins deux codeurs audio qui fonctionnent respectivement dans des première et deuxième bandes de fréquence prédéterminées, la première bande de fréquence étant plus large que la deuxième bande de fréquence et contenant cette dernière.

Le procédé selon l'invention est remarquable en ce qu'il comprend, au niveau du serveur de messagerie vocale, les étapes consistant à :
- déterminer, préalablement au dépôt du message vocal, si un terminal audio appartenant à l'utilisateur abonné au serveur de messagerie vocale utilise couramment au moins un codeur audio fonctionnant dans la première bande de fréquence prédéterminée ou au moins un codeur audio fonctionnant dans la deuxième bande de fréquence prédéterminée,
- identifier, lors du dépôt du message vocal par le terminal audio de l'utilisateur souhaitant déposer ledit message vocal, les codeurs audio susceptibles d'être utilisés par le terminal audio de l'utilisateur souhaitant déposer ledit message vocal,
- si au moins deux codeurs audio identifiés fonctionnent respectivement dans les première et deuxième bandes de fréquence prédéterminées,
   - sélectionner à partir du terminal audio de l'utilisateur souhaitant déposer le message vocal, le codeur audio fonctionnant dans la première bande de fréquence prédéterminée, si le serveur de messagerie vocale a préalablement déterminé que le terminal audio appartenant à l'utilisateur abonné utilise couramment un codeur audio fonctionnant dans la première bande de fréquence prédéterminée,
   - sélectionner à partir du terminal audio de l'utilisateur souhaitant déposer le message vocal, le codeur audio fonctionnant dans la deuxième bande de fréquence si le serveur de messagerie vocale a préalablement déterminé que le terminal audio appartenant à l'utilisateur abonné utilise couramment un codeur audio fonctionnant dans la deuxième bande de fréquence prédéterminée,
- enregistrer le message vocal déposé, dans le format de codage conforme au codeur audio qui a été sélectionné à partir du terminal audio de l'utilisateur souhaitant déposer le message vocal.

Une telle disposition permet de :
- privilégier la négociation de codeurs audio fonctionnant dans la première bande de fréquence quand le terminal audio de l'utilisateur souhaitant déposer un message vocal comprend un tel codeur et si et seulement si l'utilisateur abonné au serveur de messagerie vocale possède un terminal audio comprenant un codeur fonctionnant également dans la première bande de fréquence et utilisant de manière prépondérante celui-ci, quelque soit le type de technologie d'accès fixe ou mobile,
- privilégier la négociation de codeurs fonctionnant dans la deuxième bande de fréquence plus petite, dans le cas où l'utilisateur abonné au serveur de messagerie vocale possède soit un terminal audio comprenant uniquement des codeurs audio fonctionnant dans la deuxième bande de fréquence, soit un terminal audio comprenant au moins deux codeurs audio fonctionnant respectivement dans les première et deuxième bandes de fréquence mais utilisant plus souvent le codeur audio fonctionnant dans la deuxième bande de fréquence prédéterminée.

Un des avantages d'une telle disposition réside dans le fait que les ressources de traitement dans le serveur de messagerie vocale, en vue d'effectuer un transcodage audio, seront économisées de façon substantielle.

Un autre avantage d'une telle disposition est la possibilité de gérer un nombre plus important d'appels, compte tenu de la diminution des opérations de transcodage qui en découlent.

Une telle disposition permet aussi avantageusement de stocker les messages vocaux déposés à un format qui correspond au format de codage standard de connexion du terminal audio de l'utilisateur abonné auprès de son serveur de messagerie vocale.

Dans un mode de réalisation particulier, la première bande de fréquence prédéterminée est de type WideBand et la deuxième bande de fréquence prédéterminée est de type Narrow Band.

Une telle disposition permet :
- soit de privilégier le dépôt d'un message vocal sous un format WB et la consultation de ce message vocal sous un format WB, lorsque les terminaux audio de l'utilisateur qui dépose le message vocal et de l'utilisateur qui consulte sa messagerie vocale sont tous les deux de type WB, et à condition que le terminal audio de l'utilisateur qui consulte le message ait utilisé un codeur WB lors de ses connexions précédentes,
- soit de privilégier le dépôt d'un message vocal sous un format NB, lorsque le terminal audio de l'utilisateur qui consulte sa messagerie vocale est uniquement de type NB ou utilisant de manière privilégiée un codeur NB tout en ayant des capacités WB.

Dans un autre mode de réalisation, le codeur audio fonctionnant dans la deuxième bande de fréquence prédéterminée, qui est utilisé par le terminal audio de l'utilisateur souhaitant déposer un message vocal, est identique au codeur audio du serveur de messagerie vocale fonctionnant dans la deuxième bande de fréquence prédéterminée.

Une telle disposition permet la sélection du même codeur NB aussi bien lors du dépôt du message vocal que lors de la consultation de ce dernier. Ainsi, le serveur de messagerie vocale n'a besoin d'effectuer aucun transcodage et l'économie de ressources de traitement dans ce dernier est rendue optimale.

Dans encore un autre mode de réalisation particulier, le codeur audio fonctionnant dans la deuxième bande de fréquence prédéterminée, qui est utilisé par le terminal audio de l'utilisateur souhaitant déposer un message vocal, est différent du codeur audio du serveur de messagerie vocale fonctionnant dans la deuxième bande de fréquence prédéterminée.

Une telle disposition permet la sélection systématique d'un codeur NB lors du dépôt du message vocal. Le fait que le codeur NB utilisé lors du dépôt du message vocal par l'utilisateur souhaitant déposer un message vocal soit différent de celui utilisé par le serveur de messagerie vocale lors de la consultation dudit message vocal permet au serveur de messagerie vocale d'effectuer un transcodage entre deux codeurs NB qui est beaucoup moins coûteux en ressources de traitement qu'un transcodage entre un codeur WB et un codeur NB, puisque la fréquence d'échantillonnage est la même pour les deux codeurs NB.

Dans encore un autre mode de réalisation particulier, au cours de l'étape consistant à déterminer, préalablement au dépôt du message vocal, si un terminal audio appartenant à l'utilisateur abonné au serveur de messagerie vocale utilise couramment un codeur audio fonctionnant dans la première bande de fréquence prédéterminée ou un codeur audio fonctionnant dans la deuxième bande de fréquence prédéterminée, une liste de codeurs audio susceptibles d'être utilisés par le terminal audio de l'utilisateur abonné au serveur de messagerie vocale est envoyée par ce terminal audio au serveur de messagerie vocale, lors de la connexion du terminal audio de l'utilisateur abonné au serveur de messagerie vocale, quelque soit le réseau de communication utilisé par le terminal audio de l'utilisateur abonné.

Une telle disposition permet au serveur de messagerie vocale de déterminer simplement si le terminal de l'abonné au serveur de messagerie vocale comprend un codeur fonctionnant ou non dans la première bande de fréquence prédéterminée, tel que par exemple un codeur WB.

Dans encore un autre mode de réalisation particulier, le procédé selon l'invention comprend en outre, dans le serveur de messagerie vocale, une étape d'apprentissage pour déterminer, sur un nombre prédéterminé de connexions au serveur de messagerie vocale par le terminal audio de l'utilisateur abonné, si ce dernier utilise plus souvent un codeur audio fonctionnant dans la deuxième bande de fréquence prédéterminée qu'un codeur audio fonctionnant dans la première bande de fréquence prédéterminée.

Une telle disposition est particulièrement utile dans le cas où l'utilisateur abonné au serveur de messagerie vocale détient plusieurs terminaux dont au moins un comprend un codeur WB, ou bien détient une boîte mail dans laquelle est installée une application de type webmail supportant le codage WB en question et visant à proposer les messages vocaux directement dans cette boîte mail. Le mécanisme d'apprentissage précité permet ainsi de conserver l'enregistrement des messages vocaux déposés sous le format WB dans le serveur de messagerie vocale, dans la boîte mail ou toute autre messagerie similaire de l'utilisateur abonné, dans le but d'obtenir une qualité audio optimale lorsque le terminal WB de l'utilisateur abonné est utilisé pour consulter les messages vocaux déposés à son attention.

L'étape d'apprentissage précitée est par exemple mise en oeuvre au moyen d'un compteur installé dans le serveur de messagerie vocale.

Corrélativement, l'invention concerne un serveur de messagerie vocale destiné au dépôt de message vocal par un terminal audio appartenant à un utilisateur souhaitant déposer un message vocal à l'attention d'un autre utilisateur qui est abonné au serveur précité, ce dernier comprenant au moins deux codeurs audio qui fonctionnent respectivement dans des première et deuxième bandes de fréquence prédéterminées, la première bande de fréquence étant plus large que la deuxième bande de fréquence et contenant cette dernière.

Un tel serveur de messagerie vocale est remarquable en ce qu'il comprend:
- des moyens de détermination pour déterminer, préalablement au dépôt du message vocal, si un terminal audio appartenant à l'utilisateur abonné au serveur de messagerie vocale utilise couramment au moins un codeur audio fonctionnant dans la première bande de fréquence prédéterminée ou au moins un codeur audio fonctionnant dans la deuxième bande de fréquence prédéterminée,
- des moyens d'identification, lors du dépôt du message vocal par le terminal audio de l'utilisateur souhaitant déposer ledit message vocal, des codeurs audio susceptibles d'être utilisés par le terminal audio de l'utilisateur souhaitant déposer le message vocal,
- des moyens de sélection pour, si au moins deux codeurs audio identifiés fonctionnent respectivement dans les première et deuxième bandes de fréquence prédéterminées,
   - sélectionner à partir du terminal audio de l'utilisateur souhaitant déposer le message vocal, le codeur audio fonctionnant dans la première bande de fréquence prédéterminée, si le serveur de messagerie vocale a préalablement déterminé que le terminal audio appartenant à l'utilisateur abonné utilise couramment un codeur audio fonctionnant dans la première bande de fréquence prédéterminée,
   - sélectionner à partir du terminal audio de l'utilisateur souhaitant déposer le message vocal, le codeur audio fonctionnant dans la deuxième bande de fréquence si le serveur de messagerie vocale a préalablement déterminé que le terminal audio appartenant à l'utilisateur abonné utilise couramment un codeur audio fonctionnant dans la deuxième bande de fréquence prédéterminée,
- des moyens d'enregistrement du message vocal déposé, dans le format de codage conforme au codeur audio qui a été sélectionné à partir du terminal audio de l'utilisateur souhaitant déposer le message vocal.

Dans un mode de réalisation particulier, la première bande de fréquence prédéterminée est de type WideBand et la deuxième bande de fréquence prédéterminée est de type Narrow Band.

Dans encore un autre mode de réalisation, le codeur audio fonctionnant dans la deuxième bande de fréquence prédéterminée, qui est utilisé par le terminal audio de l'utilisateur souhaitant déposer un message vocal, est identique au codeur audio du serveur de messagerie vocale fonctionnant dans la deuxième bande de fréquence prédéterminée.

Dans encore un autre mode de réalisation, les moyens pour déterminer préalablement au dépôt du message vocal, si un terminal audio appartenant à l'utilisateur abonné au serveur de messagerie vocale utilise couramment un codeur audio fonctionnant dans la première bande de fréquence prédéterminée ou un codeur audio fonctionnant dans la deuxième bande de fréquence prédéterminée, sont adaptés pour analyser une liste de codeurs audio susceptibles d'être utilisés par le terminal audio de l'utilisateur abonné, ladite liste ayant été envoyée au serveur de messagerie vocale par le terminal audio de l'utilisateur abonné au serveur précité, lors de la connexion du terminal audio de l'utilisateur abonné au serveur de messagerie vocale, quelque soit le réseau de communication utilisé par le terminal audio de l'utilisateur abonné.

Dans encore un autre mode de réalisation, le serveur de messagerie vocale comprend en outre des moyens d'apprentissage pour déterminer, sur un nombre prédéterminé de connexions au serveur de messagerie vocale par le terminal audio de l'utilisateur abonné, si ce dernier utilise plus souvent un codeur audio fonctionnant dans la deuxième bande de fréquence prédéterminée qu'un codeur audio fonctionnant dans la première bande de fréquence prédéterminée.

L'invention vise également un programme d'ordinateur comportant des instructions pour l'exécution des étapes du procédé de dépôt de message vocal ci-dessus, lorsque le programme est exécuté par un ordinateur.

Un tel programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement lisible par un ordinateur sur lequel est enregistré un programme d'ordinateur, ce programme comportant des instructions adaptées à la mise en oeuvre du procédé de dépôt de message vocal selon l'invention, tels que décrits ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de dépôt de message vocal précité.

Le programme d'ordinateur précité présente au moins les mêmes avantages que ceux conférés par le procédé de dépôt de message vocal selon la présente invention.

### Brève description des dessins

D'autres caractéristiques et avantages apparaîtront à la lecture de modes de réalisation préférés décrits en référence aux figures dans lesquelles:
- la figure 1 représente de façon schématique une architecture de dépôt de message vocal de l'état de l'art,
- la figure 2A représente de façon schématique une architecture de dépôt de message vocal comprenant un serveur de messagerie vocale selon l'invention,
- la figure 2B représente, selon un premier exemple, un diagramme des échanges entre le terminal d'un utilisateur souhaitant déposer un message vocal et le serveur de messagerie vocale d'un autre utilisateur abonné à ce serveur,
- la figure 2C représente, selon un deuxième exemple, un diagramme des échanges entre le terminal d'un utilisateur souhaitant déposer un message vocal et le serveur de messagerie vocale d'un autre utilisateur abonné à ce serveur,
- la figure 3 représente de façon schématique l'architecture interne d'un serveur de messagerie vocale selon l'invention,
- la figure 4 représente un mode de réalisation selon l'invention d'un système de connexion d'un terminal d'un abonné auprès de son serveur de messagerie vocale,
- la figure 5 représente un organigramme selon un mode de réalisation de l'invention, d'un procédé de mise à jour d'un drapeau représentatif des capacités WB ou NB d'un terminal appartenant à un utilisateur abonné au serveur de messagerie vocale,
- la figure 6 représente un organigramme selon un mode de réalisation de l'invention, d'un procédé de dépôt de message vocal.

### Description détaillée du procédé de dépôt de message vocal selon l'invention

Le procédé de dépôt de message vocal selon l'invention est mis en oeuvre dans une architecture telle que représentée schématiquement sur la

### figure 2A.

La **figure 2A** illustre un système de dépôt de message vocal auprès d'un serveur de messagerie vocale, dans lequel est mise en oeuvre la Voix HD.

Un tel système de dépôt comprend :
- un premier terminal audio T_A, de type mobile ou fixe par exemple, appartenant à un utilisateur A souhaitant déposer un message vocal à l'attention d'un utilisateur B,
- un deuxième terminal audio T_B, de type mobile par exemple, appartenant à un utilisateur B,
- un équipement intermédiaire EI de type MSC destiné au routage dans le réseau de télécommunication, à l'interconnexion avec les autres réseaux et à la coordination des appels,
- un serveur de messagerie vocale VM destiné à recevoir des messages vocaux, en particulier en provenance du premier terminal audio T_A de l'utilisateur A, et auprès duquel l'utilisateur B, abonné audit serveur, peut consulter les messages vocaux déposés, par exemple à l'aide de son terminal audio T_B.

Dans le cadre de l'invention, le réseau de télécommunication précité est par exemple de type HD fixe ou mobile, interconnecté avec le serveur de messagerie vocale VM apte à supporter la voix HD :
- via des protocoles de signalisation de type SIP, SIP-I, H.323 etc...
- et via des liens IP, TDM etc pour le plan média.

On suppose dans l'exemple représenté que les terminaux T_A et T_B sont de type WB ou HD ou bien seulement de type NB.

Dans le cas où les terminaux T_A et T_B sont de type NB, ils contiennent chacun uniquement un ou plusieurs codeurs NB sur le réseau de télécommunication concerné. De tels codeurs NB sont par exemple du type :
- AMR ou GSM HR, GSM FR, GSM EFR, etc...si le terminal T_A ou T_B est mobile et que le protocole de signalisation est SIP par exemple,
- G.711, G.729, etc...si le terminal T_A ou T_B est fixe.

Dans le cas où les terminaux T_A et T_B sont de type WB ou HD, ils comprennent chacun au moins un codeur WB ou HD et au moins un codeur NB du type précité. Un tel codeur WB est par exemple du type :
- G.722, etc... si le terminal T_A ou T_B est fixe,
- AMR-WB si le terminal T_A ou T_B est mobile.

Le codeur WB ou HD et le codeur NB précités peuvent constituer respectivement deux modules séparés. En variante, il pourrait s'agir d'un seul codeur adapté pour fonctionner soit en WB ou HD, soit en NB.

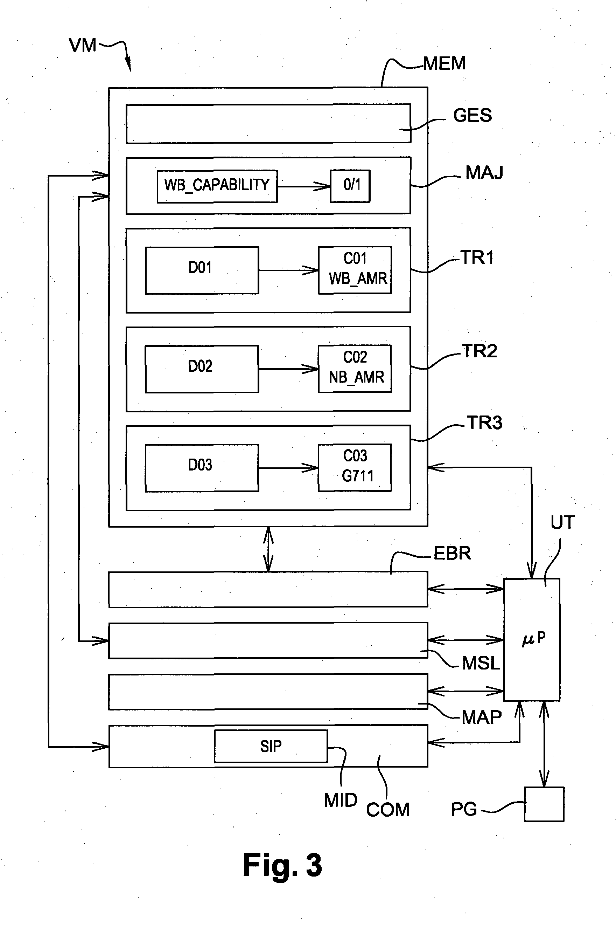

Comme illustré en **figure 3****,** le serveur de messagerie vocale VM comprend une mémoire MEM, une unité de traitement UT équipée par exemple d'un microprocesseur µP et pilotée par un programme d'ordinateur PG qui met en oeuvre le procédé de dépôt de message vocal selon l'invention. A l'initialisation, les instructions de code du programme d'ordinateur PG sont par exemple chargées dans une mémoire RAM avant d'être exécutées par le processeur de l'unité de traitement UT.

En particulier, un tel serveur comprend de façon classique :
- un ensemble EBR de boîtes de réception de messages,
- un module de communication COM, par exemple de type IP,
- un module GES de gestion des messages vocaux enregistrés dans les boîtes de réception de l'ensemble EBR précité, ledit module de gestion étant contenu dans la mémoire MEM.

La mémoire MEM contient en outre au moins deux modules de transcodage qui sont destinés si besoin à décoder, puis réencoder le contenu audio d'un message vocal déposé à l'aide du terminal T_A de l'utilisateur A.

De tels modules de transcodage s'avèrent nécessaires par exemple dans le cas où le contenu audio du message vocal déposé a été codé initialement par un codeur qui est différent du codeur contenu dans le terminal T_B destiné à consulter ledit message vocal ou proposé par le réseau lors de la consultation dudit message.

De tels modules de transcodage peuvent également s'avérer nécessaire en vue de stocker un message vocal déposé dans un format de codage différent, ce qui peut être un choix de l'opérateur pour une application de type webmail par exemple qui vise à proposer le message sur la boite mail du propriétaire de la messagerie vocale.

Dans l'exemple représenté sur la **figure 3****,** la mémoire MEM contient trois modules de transcodage TR1, TR2 et TR3.

Le module de transcodage TR1 contient un décodeur audio D01 et un codeur audio C01 fonctionnant dans une première bande de fréquence prédéterminée.

Le module de transcodage TR2 contient un décodeur audio DO2 et un codeur audio CO2 fonctionnant dans une deuxième bande de fréquence prédéterminée.

Le module de transcodage TR3 contient un décodeur audio DO3 et un codeur audio C03 fonctionnant dans ladite deuxième bande de fréquence prédéterminée.

Selon l'invention, la première bande de fréquence prédéterminée est plus large que la deuxième bande de fréquence prédéterminée et contient cette dernière.

Dans l'exemple représenté sur la **figure 3** **:**
- le codeur audio C01 fonctionne dans la bande HD ou WB, par exemple le WB-AMR,
- le codeur audio CO2 fonctionne dans la bande NB, par exemple le NB-AMR,
- le codeur audio C03 fonctionne dans la bande NB, par exemple le G.711.

Selon l'invention, le module de communication COM du serveur de messagerie vocale VM comprend en outre un module MID d'identification de codeurs audio, lequel module est piloté par le microprocesseur µP de l'unité de traitement UT.

Un tel module MID d'identification de codeurs est par exemple de type SIP (abréviation anglaise de « Session Initiation Protocol ») et est apte à :
- identifier préalablement les codeurs audio du terminal T_B de l'utilisateur B abonné au serveur de messagerie vocale VM,
- identifier les codeurs audio du terminal T_A de l'utilisateur A qui dépose un message vocal auprès du serveur de messagerie vocale VM de l'utilisateur B.

Selon l'invention, le serveur de messagerie vocale VM comprend en outre un module MSL de sélection qui est adapté à sélectionner un codeur audio à partir du terminal T_A de l'utilisateur A souhaitant déposer un message vocal à l'attention de l'utilisateur B auprès du serveur de messagerie vocale VM. Le module de sélection MSL est piloté par le microprocesseur µP de l'unité de traitement UT.

Selon l'invention, la mémoire MEM du serveur de messagerie vocale VM comprend également un module MAJ de mise à jour à la valeur 0 ou 1 d'un drapeau « WB_capability » qui est représentatif des capacités WB ou NB du terminal T_B de l'utilisateur B abonné audit serveur. Le drapeau prend la valeur 1 si le terminal T_B a des capacités WB et la valeur 0 si le terminal T_B a seulement des capacités NB.

En variante, le module MAJ pourrait être adapté pour mettre à jour à la valeur 0 ou 1 une pluralité de drapeaux respectivement associés à différentes capacités en termes de bande de fréquence du terminal T_B de l'utilisateur B abonné audit serveur. Le module MAJ pourrait par exemple mettre à jour :
- un drapeau « SWB_capability » qui est représentatif des capacités Super Wideband ou WB du terminal T_B de l'utilisateur B abonné audit serveur,
- un drapeau « WB_capability » qui est représentatif des capacités WB ou NB du terminal T_B de l'utilisateur B abonné audit serveur.

Selon l'invention, de façon optionnelle, le serveur de messagerie vocale VM comprend en outre un module d'apprentissage MAP qui est piloté par le microprocesseur µP de l'unité de traitement UT. Un tel module d'apprentissage est par exemple un compteur qui est apte à déterminer, sur un nombre prédéterminé de connexions au serveur de messagerie vocale par le terminal T_B dudit abonné, si le serveur de messagerie vocale utilise plus souvent le codeur audio CO2 ou C03 de type NB plutôt que le codeur C01 de type WB.

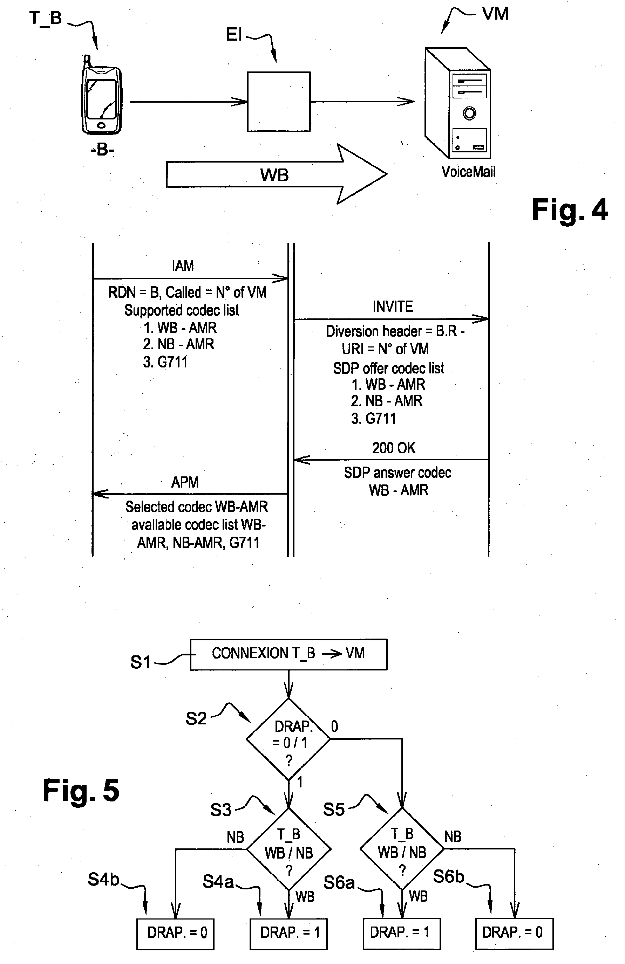

On va maintenant décrire, en référence à la **figure 4****,** le procédé d'identification, dans le serveur de messagerie vocale VM, des codeurs audio supportés par le terminal T_B de l'utilisateur B abonné au serveur VM.

Avant la première connexion de l'utilisateur B au serveur VM, le drapeau « WB_capability », mémorisé dans la mémoire MEM de la **figure 3****,** prend la valeur 1 par défaut.

Par la suite, l'utilisateur B se connecte pour la première fois, via son terminal T_B, au serveur VM, quel que soit le type de réseau de communication concerné (fixe ou mobile).

Dans l'exemple représenté sur la **figure 4****,** le terminal T_B envoie au serveur VM un message de connexion INVITE selon le protocole SIP qui contient une liste de codeurs audio supportés par le terminal T_B. Dans l'exemple représenté sur la **figure 4****,** ladite liste contient :
1. un codeur audio WB-AMR,
2. un codeur audio NB-AMR,
3. un codeur audio G.711.

L'ordre des codeurs indiqués dans cette liste est identifié par le module MID de la **figure 3****,** permettant ainsi au serveur de messagerie vocale VM de déterminer si le terminal T_B a ou non des capacités WB, ce qui est le cas dans l'exemple représenté.

La valeur du drapeau « WB_capability » est alors mise à jour. Cette valeur reste à 1, puisque le codeur audio WB-AMR a été identifié.

Après réception du message INVITE, le serveur VM sélectionne un des trois codeurs C01, CO2 et CO3 mentionné dans ladite liste. A cet instant, le module de sélection MSL du serveur de messagerie vocale VM sélectionne par exemple le codeur audio WB-AMR, selon des critères prédéterminés qui sont propres au serveur VM et au protocole de négociation utilisé. Une telle sélection pourrait par exemple être fonction d'un critère d'optimisation en termes de bande de fréquence et/ou du transcodage et/ou du débit.

En variante, le serveur de messagerie vocale VM pourrait sélectionner le codeur audio conformément à l'ordre de priorité indiqué dans ladite liste, c'est-à-dire le codeur audio figurant par exemple en premier dans la liste ou bien dans un autre ordre prédéfini.

En réponse à la réception de message INVITE dans le cas du protocole SIP, le module COM du serveur VM envoie un message SIP « 200 OK » informant le terminal T_B que le codeur audio WB-AMR est sélectionné.

De façon plus générale, la mise à jour du drapeau « WB_capability » par le module de mise à jour MAJ de la **figure 3** est effectuée selon un algorithme représenté à la **figure 5** et qui comprend les étapes S1 à S6b.

Au cours d'une étape S1, l'utilisateur B se connecte auprès de son serveur de messagerie vocale VM à l'aide de son terminal T_B.

Au cours d'une étape S2, il est déterminé si le drapeau « WB_capability » a la valeur 0 ou 1.

Si la valeur est égale à 1, au cours d'une étape S3, il est déterminé si le terminal T_B est de type WB ou NB.

Si le terminal T_B est de type WB, au cours d'une étape S4a, le drapeau garde la valeur 1.

Si le terminal T_B est de type NB, au cours d'une étape S4b, le drapeau prend la valeur 0.

Si à la suite de l'étape S2, la valeur du drapeau « WB_capability » est égale à 0, au cours d'une étape S5, il est déterminé si le terminal T_B est de type WB ou NB.

Si le terminal T_B est de type WB, au cours d'une étape S6a, le drapeau prend la valeur 1.

Si le terminal T_B est de type NB, au cours d'une étape S6b, le drapeau garde la valeur 0.

Dans le cas où un réseau non HD cohabite avec un réseau HD, le module d'apprentissage MAP de la **figure 3** est activé. Ceci permet d'éviter que lorsque le terminal T_B de l'utilisateur B est de type WB et que ce dernier accède dans un premier temps, via son terminal T_B, à un réseau WB, tel que 3G par exemple, puis dans un deuxième temps accède à un réseau non WB, tel que 2G par exemple, le drapeau « WB_capability » prenne automatiquement la valeur 0 lors de l'appel suivant de l'utilisateur A auprès du serveur de messagerie vocale VM.

Le module d'apprentissage MAP, qui dans l'exemple représenté est un compteur, est initialisé ou ré-initialisé à une valeur X prédéfinie dès que l'utilisateur B se connecte au serveur de messagerie vocale VM en HD. A chaque fois que la connexion auprès du serveur VM est effectuée par le terminal T_B de l'utilisateur B via un codeur bande étroite, la valeur courante du compteur précité est décrémentée de 1. Lorsque celle-ci atteint 0, le serveur de messagerie vocale VM négociera uniquement un codeur bande étroite lors du dépôt d'un message vocal par le terminal T_A de l'utilisateur A auprès du serveur VM. La valeur courante sera incrémentée de 1 à chaque nouvelle connexion auprès du serveur VM par le terminal T_B de l'utilisateur B, via un codeur WB.

Un tel module d'apprentissage MAP peut également s'avérer utile dans le cas où l'utilisateur B possède plusieurs terminaux audio dont au moins un est de type WB, de même qu'une webmail lui permettant d'écouter des messages en qualité WB. La mémorisation du drapeau « WB_capability » à la valeur 1 dans la mémoire MEM du serveur VM permet de conserver un enregistrement WB des messages vocaux déposés dans le serveur VM, dans le but d'obtenir une qualité optimale lorsque l'utilisateur B écoute un message vocal via sa webmail ou tout autre système similaire, à l'aide de son terminal T_B de type WB.

Il convient toutefois de noter que si lors de l'utilisation d'une webmail permettant une restitution des messages vocaux en qualité WB à l'utilisateur B, le transfert des messages du serveur de messagerie vocale VM à la webmail est automatique, il conviendra de désactiver ledit module d'apprentissage MAP pour préserver une qualité WB lors de l'écoute des messages vocaux par le terminal T_B de l'utilisateur B, via la webmail.

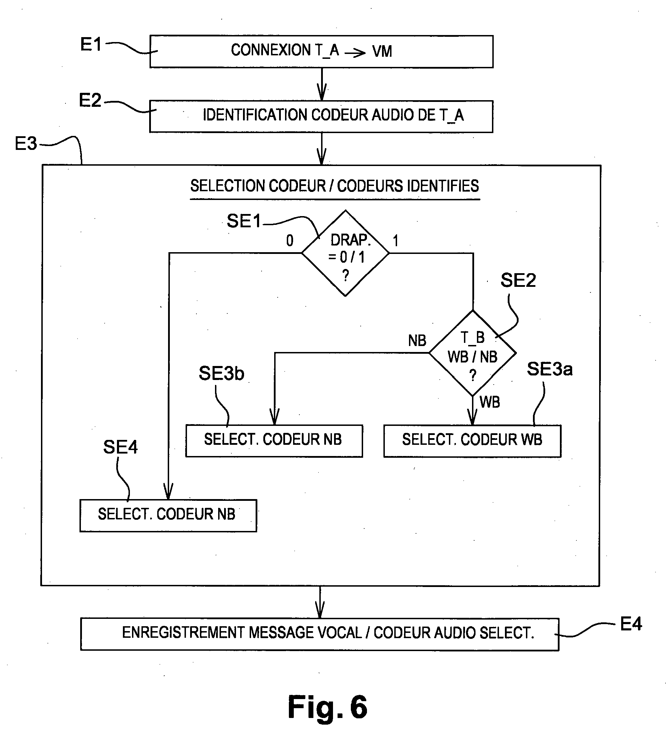

On va maintenant décrire, en référence à la **figure 6****,** le procédé de dépôt de message vocal selon l'invention, lequel est représenté sous la forme d'un algorithme comportant des étapes E1 à E4.

Un tel procédé de dépôt est implémenté de manière logicielle ou matérielle dans le serveur de messagerie vocale VM représenté sur les **figures 2A** et 3, au sein de l'architecture représentée sur la **figure 2A****.**

Au cours d'une étape E1 représentée à la **figure 6****,** l'utilisateur A, qui souhaite déposer un message vocal à l'attention de l'utilisateur B, se connecte, via son terminal T_A, au serveur VM, quel que soit le type de réseau de communication concerné (fixe ou mobile), pour déposer un message vocal.

Une telle connexion au serveur de messagerie vocale peut être mise en oeuvre dans le cas par exemple où le réseau de télécommunication est un réseau mobile avec renvoi inconditionnel de type CFU activé, comme représenté à la **figure 2A****..**

Selon une autre configuration non représentée sur la **figure 2A****,** l'utilisateur A qui souhaite déposer un message vocal avec son terminal T_A auprès du serveur de messagerie vocale VM peut contacter directement ce serveur en composant un numéro d'appel associé à ce dernier, puis déposer un message vocal après avoir saisi préalablement le numéro d'appel de l'utilisateur B abonné audit serveur.

Au cours d'une étape E2 représentée à la **figure 6****,** il est procédé, dans le serveur de messagerie vocal VM, à une identification des codeurs audio utilisés par le terminal audio T_A.

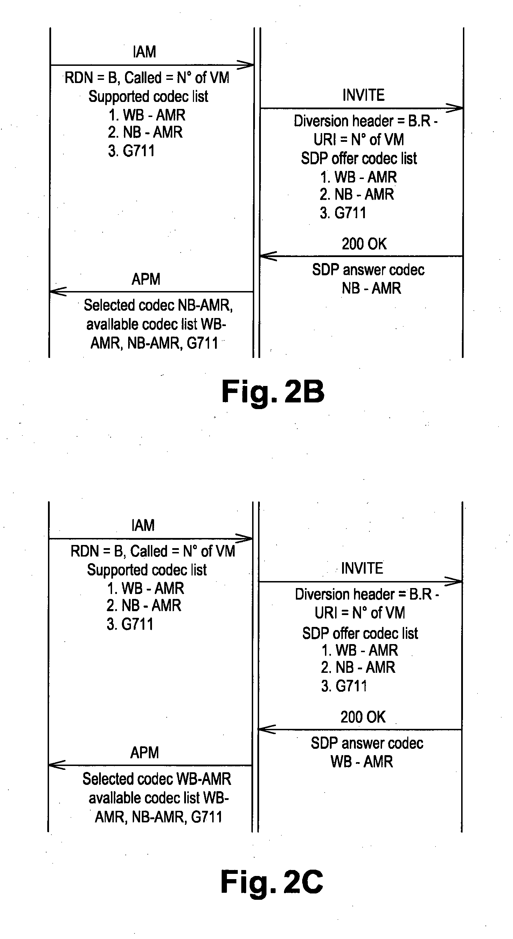

Dans l'exemple représenté sur la **figure 2B****,** le terminal T_A envoie au serveur VM un message de connexion INVITE selon le protocole SIP qui contient une liste de codeurs audio supportés par le terminal T_A. Dans l'exemple représenté sur la **figure 2B****,** ladite liste contient :
1. un codeur audio WB-AMR,
2. un codeur audio NB-AMR,
3. un codeur audio G.711.

L'ordre des codeurs indiqués dans cette liste est identifié par le module MID de la **figure 3****,** permettant notamment au serveur de messagerie vocale VM de déterminer si le terminal T_A a ou non des capacités WB, ce qui est le cas dans l'exemple représenté.

Au cours d'une étape E3 représentée à la **figure 6****,** le module de sélection MSL représenté à la **figure 3** procède à la sélection d'un codeur audio parmi ladite liste qui peut tenir compte de l'ordre dans lequel figurent les codeurs audio mentionnés dans ladite liste. Ladite étape E3 comprend les sous-étapes suivantes :
Au cours d'une sous-étape SE1 représentée à la **figure 6****,** il est déterminé si le drapeau « WB_capability » a la valeur 0 ou 1.

Si la valeur est égale à 1, au cours d'une sous-étape SE2, il est déterminé si le terminal T_A est de type WB ou NB.

Si le terminal T_A est de type WB, au cours d'une étape SE3a, le codeur WB du terminal T_A est sélectionné.

Si le terminal T_A est de type NB, au cours d'une étape SE3b, le codeur NB du terminal T_A est sélectionné.

Si à la suite de l'étape SE1, la valeur du drapeau « WB_capability » est égale à 0, au cours d'une étape SE4, le codeur NB du terminal T_A est sélectionné, et cela quelles que soient les capacités WB ou NB du terminal T_A.

Au cours d'une étape E4 représentée à la **figure 6****,** il est procédé à l'enregistrement du message vocal dans une des boîtes de réception du module EBR du serveur de messagerie vocal VM représenté à la **figure 3****,** ledit message étant enregistré dans le format de codage conforme au codeur audio qui vient d'être sélectionné à partir du terminal audio T_A de l'utilisateur A qui dépose le message vocal, à l'issue de l'étape E3 précitée.

On va maintenant décrire ci-dessous deux configurations différentes d'enregistrement de message vocal.

Selon une première configuration représentée à la **figure 2B****,** on suppose d'une part que le terminal T_A est par exemple de type WB et que, d'autre part, le terminal T_B est par exemple de type NB ou bien que la valeur X du compteur précité atteint la valeur 0.

Comme le terminal T_B est de type NB, la liste des codeurs audio diffère de celle représentée sur la **figure 4****,** par le fait qu'elle ne contient plus de codeurs audio WB.

Après réception du message INVITE lors de la connexion du terminal T_B de l'utilisateur B abonné au serveur de messagerie vocale VM, ce dernier détermine ainsi que le terminal T_B de l'utilisateur abonné B a uniquement des capacités NB.

En conséquence, en réponse au message de connexion INVITE envoyé par le terminal T_A au serveur VM, le module COM du serveur VM envoie un message SIP « 200 OK » informant le terminal T_A qu'il doit utiliser un codeur audio NB pour déposer son message vocal.

A cet effet, au cours de l'étape E4 précitée, un message vocal est enregistré auprès du serveur de messagerie vocale VM au moyen du terminal T_A de l'utilisateur A souhaitant déposer le message vocal, dans un format de codage conforme à un codeur NB sélectionné à partir du terminal T_A, par exemple le codeur AMR.

Lorsque l'utilisateur B consulte par la suite, via son terminal T_B de type NB, le message vocal déposé par le terminal T_A de l'utilisateur A, le serveur de messagerie vocale VM sélectionne un codeur NB parmi sa liste de codeurs audio préalablement envoyée dans le message INVITE.

Selon une première alternative, si le codeur NB sélectionné dans ladite liste par le serveur de messagerie vocal VM est également le codeur AMR, le serveur VM n'effectuera aucun transcodage, ce qui optimisera ainsi ses ressources de traitement.

Selon une deuxième alternative, si le codeur NB sélectionné dans ladite liste par le serveur de messagerie vocal VM est un codeur NB qui est différent du codeur AMR ayant servi à coder le message vocal déposé, par exemple un codeur GSM EFR, le serveur VM est obligé d'effectuer un transcodage pour passer du format AMR au format GSM EFR. Un tel transcodage est de toute façon moins coûteux que celui qui aurait été mis en oeuvre pour passer du format WB à un format NB, puisque les deux codeurs AMR et GSM EFR fonctionnent à une fréquence d'échantillonnage identique de 8 KHz.

Selon une deuxième configuration représentée à la **figure 2C****,** on suppose d'une part que le terminal T_A est de type WB et que, d'autre part, le terminal T_B est de type WB (réseau d'accès WB, 3G par exemple) ou bien que la valeur X du compteur précité est supérieure à 0.

Selon cette deuxième configuration, après réception du message INVITE contenant une liste de codeurs audio du même type que celle de la **figure 4****,** lors de la connexion du terminal T_B de l'utilisateur B abonné au serveur de messagerie vocale VM, ce dernier détermine ainsi que le terminal T_B de l'utilisateur abonné B a des capacités WB.

En conséquence, en réponse au message de connexion INVITE envoyé par le terminal T_A au serveur VM, le module COM du serveur VM envoie un message SIP « 200 OK » informant le terminal T_A qu'il doit utiliser un codeur audio WB pour déposer son message vocal.

A cet effet, au cours de l'étape E4 précitée, un message vocal est enregistré auprès du serveur de messagerie vocale VM au moyen du terminal T_A de l'utilisateur A souhaitant déposer le message vocal, dans un format de codage conforme à un codeur WB sélectionné à partir du terminal T_A, par exemple un codeur WB-AMR.

Lorsque l'utilisateur B consulte par la suite, via son terminal T_B de type WB, le message vocal déposé par le terminal T_A de l'utilisateur A, le serveur de messagerie vocale VM sélectionne un codeur WB si le réseau et le terminal T_B utilisé à l'instant donné le permettent.

Selon une première alternative, si le codeur WB sélectionné dans ladite liste par le serveur de messagerie vocal VM est également le codeur WB-AMR, le serveur VM n'effectuera aucun transcodage, ce qui optimisera ainsi ses ressources de traitement.

Selon une deuxième alternative, si le codeur WB sélectionné dans ladite liste par le serveur de messagerie vocal VM est un codeur WB qui est différent du codeur WB-AMR ayant servi à coder le message vocal déposé, le serveur VM est obligé d'effectuer un transcodage.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

Ainsi par exemple, au lieu que les première et deuxième bandes de fréquence prédéterminées soient respectivement de type WB et NB, elles pourraient être respectivement :
- de type Super Wideband et WB,
- ou bien de type Super Wideband et NB.

## Revendications

1. Procédé de dépôt de message vocal, par un terminal audio (T_A) appartenant à un utilisateur souhaitant déposer un message vocal à l'attention d'un autre utilisateur, auprès d'un serveur dé messagerie vocale (VM) auquel est abonné l'autre utilisateur et comprenant au moins deux codeurs audio (CO1, CO2) qui fonctionnent respectivement dans des première et deuxième bandes de fréquence prédéterminées, la première bande de fréquence étant plus large que la deuxième bande de fréquence et contenant cette dernière, ledit procédé étant **caractérisé en ce qu'**il comprend, au niveau du serveur de messagerie vocale, les étapes consistant à :
- déterminer (S1-S6b), préalablement au dépôt du message vocal, si un terminal audio (T_B) appartenant à l'utilisateur abonné au serveur de messagerie vocale utilise couramment au moins un codeur audio fonctionnant dans la première bande de fréquence prédéterminée ou au moins un codeur audio fonctionnant dans la deuxième bande de fréquence prédéterminée,
- identifier (E2), lors du dépôt du message vocal par le terminal audio de l'utilisateur souhaitant déposer ledit message vocal, les codeurs audio susceptibles d'être utilisés par le terminal audio de l'utilisateur souhaitant déposer ledit message vocal,
- si au moins deux codeurs audio identifiés fonctionnent respectivement dans les première et deuxième bandes de fréquence prédéterminées,
• sélectionner (SE3a) à partir du terminal audio de l'utilisateur souhaitant déposer le message vocal, le codeur audio fonctionnant dans la première bande de fréquence prédéterminée, si le serveur de messagerie vocale a préalablement déterminé que le terminal audio appartenant à l'utilisateur abonné utilise couramment un codeur audio fonctionnant dans la première bande de fréquence prédéterminée,
• sélectionner (SE3b ou SE4) à partir du terminal audio de l'utilisateur souhaitant déposer le message vocal, le codeur audio fonctionnant dans la deuxième bande de fréquence si le serveur de messagerie vocale a préalablement déterminé que le terminal audio appartenant à l'utilisateur abonné utilise couramment un codeur audio fonctionnant dans la deuxième bande de fréquence prédéterminée,
- enregistrer (E4) le message vocal déposé, dans le format de codage conforme au codeur audio qui a été sélectionné à partir du terminal audio de l'utilisateur souhaitant déposer le message vocal.

2. Procédé selon la revendication 1, au cours duquel la première bande de fréquence prédéterminée est de type WideBand et la deuxième bande de fréquence prédéterminée est de type Narrow Band.

3. Procédé selon la revendication 1 ou la revendication 2, au cours duquel le codeur audio fonctionnant dans la deuxième bande de fréquence prédéterminée, qui est utilisé par le terminal audio de l'utilisateur souhaitant déposer un message vocal, est identique au codeur audio du serveur de messagerie vocale fonctionnant dans la deuxième bande de fréquence prédéterminée.

4. Procédé selon la revendication 1 ou la revendication 2, au cours duquel le codeur audio fonctionnant dans la deuxième bande de fréquence prédéterminée, qui est utilisé par le terminal audio de l'utilisateur souhaitant déposer un message vocal, est différent du codeur audio du serveur de messagerie vocale fonctionnant dans la deuxième bande de fréquence prédéterminée.

5. Procédé selon l'une quelconque des revendications 1 à 4, dans lequel au cours de l'étape consistant à déterminer, préalablement au dépôt du message vocal, si un terminal audio appartenant à l'utilisateur abonné au serveur de messagerie vocale utilise couramment un codeur audio fonctionnant dans la première bande de fréquence prédéterminée ou un codeur audio fonctionnant dans la deuxième bande de fréquence prédéterminée, une liste de codeurs audio susceptibles d'être utilisés par le terminal audio de l'utilisateur abonné au serveur de messagerie vocale est envoyée par ce terminal audio au serveur de messagerie vocale, lors de la connexion du terminal audio de l'utilisateur abonné au serveur de messagerie vocale, quelque soit le réseau de communication utilisé par le terminal audio de l'utilisateur abonné.

6. Procédé selon l'une quelconque des revendications 1 à 5, comprenant en outre, dans le serveur de messagerie vocale, une étape d'apprentissage pour déterminer, sur un nombre prédéterminé de connexions au serveur de messagerie vocale par le terminal audio de l'utilisateur abonné, si ce dernier utilise plus souvent un codeur audio fonctionnant dans la deuxième bande de fréquence prédéterminée qu'un codeur audio fonctionnant dans la première bande de fréquence prédéterminée.

7. Serveur de messagerie vocale (VM) destiné au dépôt de message vocal par un terminal audio (T_A) appartenant à un utilisateur souhaitant déposer un message vocal à l'attention d'un autre utilisateur qui est abonné au serveur précité, ledit serveur comprenant au moins deux codeurs audio (CO1, CO2) qui fonctionnent respectivement dans des première et deuxième bandes de fréquence prédéterminées, la première bande de fréquence étant plus large que la deuxième bande de fréquence et contenant cette dernière, ledit serveur étant **caractérisé en ce qu'**il comprend :
- des moyens (MID, MAJ) de détermination pour déterminer, préalablement au dépôt du message vocal, si un terminal audio appartenant à l'utilisateur abonné au serveur de messagerie vocale utilise couramment au moins un codeur audio fonctionnant dans la première bande de fréquence prédéterminée ou au moins un codeur audio fonctionnant dans la deuxième bande de fréquence prédéterminée,
- des moyens (MID) d'identification, lors du dépôt du message vocal par le terminal audio de l'utilisateur souhaitant déposer ledit message vocal, des codeurs audio susceptibles d'être utilisés par ledit terminal audio de l'utilisateur souhaitant déposer le message vocal,
- des moyens (MSL) de sélection pour, si au moins deux codeurs audio identifiés fonctionnent respectivement dans les première et deuxième bandes de fréquence prédéterminées,
• sélectionner (SE3a) à partir du terminal audio de l'utilisateur souhaitant déposer le message vocal, le codeur audio fonctionnant dans la première bande de fréquence prédéterminée, si le serveur de messagerie vocale (VM) a préalablement déterminé que le terminal audio appartenant à l'utilisateur abonné utilise couramment un codeur audio fonctionnant dans la première bande de fréquence prédéterminée,
• sélectionner (SE3b ; SE4) à partir du terminal audio de l'utilisateur souhaitant déposer le message vocal, le codeur audio fonctionnant dans la deuxième bande de fréquence si le serveur de messagerie vocale (VM) a préalablement déterminé que le terminal audio appartenant à l'utilisateur abonné utilise couramment un codeur audio fonctionnant dans la deuxième bande de fréquence prédéterminée,
- des moyens (EBR) d'enregistrement du message vocal déposé, dans le format de codage conforme au codeur audio qui a été sélectionné à partir du terminal audio de l'utilisateur souhaitant déposer le message vocal.

8. Serveur selon la revendication 7, dans lequel la première bande de fréquence prédéterminée est de type WideBand et la deuxième bande de fréquence prédéterminée est de type Narrow Band.

9. Serveur selon la revendication 7 ou la revendication 8, dans lequel le codeur audio fonctionnant dans la deuxième bande de fréquence prédéterminée, qui est utilisé par le terminal audio de l'utilisateur souhaitant déposer un message vocal, est identique au codeur audio du serveur de messagerie vocale fonctionnant dans la deuxième bande de fréquence prédéterminée.

10. Serveur selon la revendication 7 ou la revendication 8, dans lequel le codeur audio fonctionnant dans la deuxième bande de fréquence prédéterminée, qui est utilisé par le terminal audio de l'utilisateur souhaitant déposer un message vocal, est différent du codeur audio du serveur de messagerie vocale fonctionnant dans la deuxième bande de fréquence prédéterminée.

11. Serveur selon l'une quelconque des revendications 7 à 10, dans lequel les moyens pour déterminer préalablement au dépôt du message vocal, si un terminal audio appartenant à l'utilisateur abonné au serveur de messagerie vocale utilise couramment un codeur audio fonctionnant dans la première bande de fréquence prédéterminée ou un codeur audio fonctionnant dans la deuxième bande de fréquence prédéterminée, sont adaptés pour analyser une liste de codeurs audio susceptibles d'être utilisés par le terminal audio de l'utilisateur abonné, ladite liste ayant été envoyée au serveur de messagerie vocale par le terminal audio de l'utilisateur abonné audit serveur, lors de la connexion du terminal audio de l'utilisateur abonné au serveur de messagerie vocale, quelque soit le réseau de communication utilisé par le terminal audio de l'utilisateur abonné.

12. Serveur selon l'une quelconque des revendications 7 à 11, comprenant en outre des moyens (MAP) d'apprentissage pour déterminer, sur un nombre prédéterminé de connexions au serveur de messagerie vocale par le terminal audio de l'utilisateur abonné, si ce dernier utilise plus souvent un codeur audio fonctionnant dans la deuxième bande de fréquence prédéterminée qu'un codeur audio fonctionnant dans la première bande de fréquence prédéterminée.

13. Programme d'ordinateur comportant des instructions pour mettre en oeuvre le procédé de dépôt de message vocal selon l'une quelconque des revendications 1 à 6, lorsque ledit procédé de dépôt est exécuté sur un ordinateur.

14. Support d'enregistrement lisible par un ordinateur sur lequel est enregistré un programme d'ordinateur comprenant des instructions pour l'exécution des étapes du procédé de dépôt de message vocal selon l'une quelconque des revendications 1 à 6, lorsque ledit programme est exécuté par un ordinateur.

## Patentansprüche

1. Verfahren zum Hinterlassen einer Voice-Mail durch ein Funkterminal (T_A), das einem Benutzer angehört, der eine Voice-Mail zu Händen eines anderen Benutzers bei einem Voice-Mail-Server (VM) hinterlassen möchte, bei dem der andere Benutzer Teilnehmer ist, und umfassend mindestens zwei Funkcodierer (CO1, CO2), die in einem ersten bzw. einem zweiten vorbestimmten Frequenzband funktionieren, wobei das erste Frequenzband breiter als das zweite Frequenzband ist und dieses letztgenannte enthält, wobei das Verfahren **dadurch gekennzeichnet ist, dass** es im Bereich des Voice-Mail-Servers die folgenden Schritte umfasst, darin bestehend:
- vor dem Hinterlassen der Voice-Mail zu bestimmen (S1-S6b), ob ein Funkterminal (T_B), der dem Benutzer angehört, der Teilnehmer am Voice-Mail-Server ist, üblicherweise mindestens einen Funkcodierer verwendet, der im ersten vorbestimmten Frequenzband funktioniert, oder mindestens einen Funkcodierer verwendet, der im zweiten vorbestimmten Frequenzband funktioniert,
- beim Hinterlassen der Voice-Mail durch das Funkterminal des Benutzers, der die Voice-Mail hinterlassen möchte, die Funkcodierer zu identifizieren (E2), die geeignet sind, vom Funkterminal des Benutzers, der die Voice-Mail hinterlassen möchte, verwendet zu werden,
- wenn mindestens zwei identifizierte Funkcodierer im ersten bzw. zweiten vorbestimmten Frequenzband funktionieren,
* auf Basis des Funkterminals des Benutzers, der die Voice-Mail hinterlassen möchte, den Funkcodierer auszuwählen (SE3a), der im ersten vorbestimmten Frequenzband funktioniert, wenn der Voice-Mail-Server vorher bestimmt hat, dass das Funkterminal, das dem teilnehmenden Benutzer angehört, üblicherweise einen Funkcodierer verwendet, der im ersten vorbestimmten Frequenzband funktioniert,
* auf Basis des Funkterminals des Benutzers, der die Voice-Mail hinterlassen möchte, den Funkcodierer auszuwählen (SE3b oder SE4), der im zweiten Frequenzband funktioniert, wenn der Voice-Mail-Server vorher bestimmt hat, dass das Funkterminal, das dem teilnehmenden Benutzer angehört, üblicherweise einen Funkcodierer verwendet, der im zweiten vorbestimmten Frequenzband funktioniert,
- die hinterlassene Voice-Mail im Codierformat konform mit dem Funkcodierer, der vom Funkterminal des Benutzers, der die Voice-Mail hinterlassen möchte, ausgewählt wurde, aufzuzeichnen (E4).

2. Verfahren nach Anspruch 1, während dessen das erste vorbestimmte Frequenzband vom Typ Wide Band und das zweite vorbestimmte Frequenzband vom Typ Narrow Band ist.

3. Verfahren nach Anspruch 1 oder 2, während dessen der Funkcodierer, der im zweiten vorbestimmten Frequenzband funktioniert, der vom Funkterminal des Benutzers, der eine Voice-Mail hinterlassen möchte, verwendet wird, identisch mit dem Funkcodierer des Voice-Mail-Servers, der in dem zweiten vorbestimmten Frequenzband funktioniert, ist.

4. Verfahren nach Anspruch 1 oder 2, während dessen der Funkcodierer, der im zweiten vorbestimmten Frequenzband funktioniert, der von dem Funkterminal des Benutzers, der eine Voice-Mail hinterlassen möchte, verwendet wird, unterschiedlich zu dem Funkcodierer des Voice-Mail-Servers, der im zweiten vorbestimmten Frequenzband funktioniert, ist.

5. Verfahren nach einem der Ansprüche 1 bis 4, bei dem während des Schrittes, der darin besteht, vor dem Hinterlassen der Voice-Mail zu bestimmen, ob ein Funkterminal, das dem Benutzer angehört, der Teilnehmer am Voice-Mail-Server ist, üblicherweise einen Funkcodierer verwendet, der im ersten vorbestimmten Frequenzband funktioniert, oder einen Funkcodierer verwendet, der im zweiten vorbestimmten Frequenzband funktioniert, eine Liste von Funkcodierern, die geeignet sind, vom Funkterminal des Benutzers, der Teilnehmer am Voice-Mail-Server ist, verwendet zu werden, von diesem Funkterminal zum Voice-Mail-Server beim Anschluss des Funkterminals des Benutzers, der Teilnehmer am Voice-Mail-Server ist, gesandt wird, unabhängig von dem Kommunikationsnetz, das von dem Funkterminal des teilnehmenden Benutzers verwendet wird.

6. Verfahren nach einem der Ansprüche 1 bis 5, ferner umfassend im Voice-Mail-Server einen Lernschritt, um an einer vorbestimmten Anzahl von Anschlüssen an den Voice-Mail-Server durch das Funkterminal des teilnehmenden Benutzers zu bestimmten, ob dieses letztgenannte öfter einen Funkcodierer, der im zweiten vorbestimmten Frequenzband funktioniert, als einen Funkcodierer, der im ersten vorbestimmten Frequenzband funktioniert, verwendet.

7. Voice-Mail-Server (VM), der zum Hinterlassen einer Voice-Mail durch ein Funkterminal (T_A) bestimmt ist, das einem Benutzer angehört, der eine Voice-Mail zu Händen eines anderen Benutzers, der bei dem vorgenannten Server Teilnehmer ist, hinterlassen möchte, und umfassend mindestens zwei Funkcodierer (CO1, CO2), die in einem ersten bzw. einem zweiten vorbestimmten Frequenzband funktionieren, wobei das erste Frequenzband breiter als das zweite Frequenzband ist und dieses letztgenannte enthält, wobei der Server **dadurch gekennzeichnet ist, dass** er Folgendes umfasst:
- Bestimmungsmittel (MID, MAJ), um vor dem Hinterlassen der Voice-Mail zu bestimmen, ob ein Funkterminal, das dem Benutzer angehört, der Teilnehmer am Voice-Mail-Server ist, üblicherweise mindestens einen Funkcodierer verwendet, der im ersten vorbestimmten Frequenzband funktioniert, oder mindestens einen Funkcodierer verwendet, der im zweiten vorbestimmten Frequenzband funktioniert,
- Identifikationsmittel (MID), um beim Hinterlassen der Voice-Mail durch das Funkterminal des Benutzers, der die Voice-Mail hinterlassen möchte, die Funkcodierer zu identifizieren, die geeignet sind, vom Funkterminal des Benutzers, der die Voice-Mail hinterlassen möchte, verwendet zu werden,
- Auswahlmittel (MSL), um, wenn mindestens zwei identifizierte Funkcodierer im ersten bzw. zweiten vorbestimmten Frequenzband funktionieren,
* auf Basis des Funkterminals des Benutzers, der die Voice-Mail hinterlassen möchte, den Funkcodierer auszuwählen (SE3a), der im ersten vorbestimmten Frequenzband funktioniert, wenn der Voice-Mail-Server (VM) vorher bestimmt hat, dass das Funkterminal, das dem teilnehmenden Benutzer angehört, üblicherweise einen Funkcodierer verwendet, der im ersten vorbestimmten Frequenzband funktioniert,
* auf Basis des Funkterminals des Benutzers, der die Voice-Mail hinterlassen möchte, den Funkcodierer auszuwählen (SE3b; SE4), der im zweiten Frequenzband funktioniert, wenn der Voice-Mail-Server (VM) vorher bestimmt hat, dass das Funkterminal, das dem teilnehmenden Benutzer angehört, üblicherweise einen Funkcodierer verwendet, der im zweiten vorbestimmten Frequenzband funktioniert,
- Aufzeichnungsmittel (EBR), um die hinterlassene Voice-Mail im Codierformat konform mit dem Funkcodierer, der vom Funkterminal des Benutzers, der die Voice-Mail hinterlassen möchte, ausgewählt wurde, aufzuzeichnen.

8. Server nach Anspruch 7, bei dem das erste vorbestimmte Frequenzband vom Typ Wide Band und das zweite vorbestimmte Frequenzband vom Typ Narrow Band ist.

9. Server nach Anspruch 7 oder 8, bei dem der Funkcodierer, der im zweiten vorbestimmten Frequenzband funktioniert, der vom Funkterminal des Benutzers, der eine Voice-Mail hinterlassen möchte, verwendet wird, identisch mit dem Funkcodierer des Voice-Mail-Servers, der in dem zweiten vorbestimmten Frequenzband funktioniert, ist.

10. Server nach Anspruch 7 oder 8, bei dem der Funkcodierer, der im zweiten vorbestimmten Frequenzband funktioniert, der von dem Funkterminal des Benutzers, der eine Voice-Mail hinterlassen möchte, verwendet wird, unterschiedlich zu dem Funkcodierer des Voice-Mail-Servers, der im zweiten vorbestimmten Frequenzband funktioniert, ist.

11. Server nach einem der Ansprüche 7 bis 10, bei dem die Mittel, um vor dem Hinterlassen der Voice-Mail zu bestimmen, ob ein Funkterminal, das dem Benutzer angehört, der Teilnehmer am Voice-Mail-Server ist, üblicherweise einen Funkcodierer verwendet, der im ersten vorbestimmten Frequenzband funktioniert, oder einen Funkcodierer verwendet, der im zweiten vorbestimmten Frequenzband funktioniert, dazu vorgesehen sind, eine Liste von Funkcodierern zu analysieren, die geeignet sind, vom Funkterminal des teilnehmenden Benutzers verwendet zu werden, wobei die Liste zum Voice-Mail-Server vom Funkterminal des Benutzers, der Teilnehmer am Server beim Anschluss des Funkterminals des Benutzers, der Teilnehmer am Voice-Mail-Server ist, gesandt wird, unabhängig von dem Kommunikationsnetz, das von dem Funkterminal des teilnehmenden Benutzers verwendet wird.

12. Server nach einem der Ansprüche 7 bis 11, ferner umfassend Lernhilfsmittel (MAP), um an einer vorbestimmten Anzahl von Anschlüssen an den Voice-Mail-Server durch das Funkterminal des teilnehmenden Benutzers zu bestimmten, ob dieses letztgenannte öfter einen Funkcodierer, der im zweiten vorbestimmten Frequenzband funktioniert, als einen Funkcodierer, der im ersten vorbestimmten Frequenzband funktioniert, verwendet.

13. Computerprogramm, umfassend Befehle, um das Verfahren zum Hinterlassen einer Voice-Mail nach einem der Ansprüche 1 bis 6 einzusetzen, wenn das Verfahren zum Hinterlassen auf einem Computer ausgeführt wird.

14. Von einem Computer lesbarer Aufzeichnungsträger, auf dem ein Computerprogramm aufgezeichnet ist, umfassend Befehle für die Ausführung der Schritte des Verfahrens zum Hinterlassen einer Voice-Mail nach einem der Ansprüche 1 bis 6, wenn das Programm von einem Computer ausgeführt wird.

## Claims

1. Method for leaving a voice message, by an audio terminal (T_A) belonging to a user wishing to leave a voice message for the attention of another user, with a voice messaging server (VM) to which the other user is subscribed and comprising at least two audio coders (CO1, CO2) which operate respectively in first and second predetermined frequency bands, the first frequency band being wider than the second frequency band and containing the latter, said method being **characterized in that** it comprises, at the level of the voice messaging server, the steps consisting in:
- determining (S1-S6b), prior to the leaving of the voice message, whether an audio terminal (T_B) belonging to the user subscribed to the voice messaging server normally uses at least one audio coder operating in the first predetermined frequency band or at least one audio coder operating in the second predetermined frequency band,
- identifying (E2), during the leaving of the voice message by the audio terminal of the user wishing to leave said voice message, the audio coders liable to be used by the audio terminal of the user wishing to leave said voice message,
- if at least two identified audio coders operate respectively in the first and second predetermined frequency bands,
• selecting (SE3a) from the audio terminal of the user wishing to leave the voice message, the audio coder operating in the first predetermined frequency band, if the voice messaging server has previously determined that the audio terminal belonging to the subscribed user normally uses an audio coder operating in the first predetermined frequency band,
• selecting (SE3b or SE4) from the audio terminal of the user wishing to leave the voice message, the audio coder operating in the second frequency band if the voice messaging server has previously determined that the audio terminal belonging to the subscribed user normally uses an audio coder operating in the second predetermined frequency band,
- recording (E4) the voice message left, in the coding format in accordance with the audio coder which has been selected from the audio terminal of the user wishing to leave the voice message.

2. Method according to Claim 1, in the course of which the first predetermined frequency band is of WideBand type and the second predetermined frequency band is of Narrow Band type.

3. Method according to Claim 1 or Claim 2, in the course of which the audio coder which is operating in the second predetermined frequency band and which is used by the audio terminal of the user wishing to leave a voice message is identical to the audio coder of the voice messaging server operating in the second predetermined frequency band.

4. Method according to Claim 1 or Claim 2, in the course of which the audio coder which is operating in the second predetermined frequency band and which is used by the audio terminal of the user wishing to leave a voice message is different from the audio coder of the voice messaging server operating in the second predetermined frequency band.

5. Method according to any one of Claims 1 to 4, in which in the course of the step consisting in determining, prior to the leaving of the voice message, whether an audio terminal belonging to the user subscribed to the voice messaging server normally uses an audio coder operating in the first predetermined frequency band or an audio coder operating in the second predetermined frequency band, a list of audio coders liable to be used by the audio terminal of the user subscribed to the voice messaging server is dispatched by this audio terminal to the voice messaging server, upon connection of the audio terminal of the user subscribed to the voice messaging server, whatever the communication network used by the audio terminal of the subscribed user.

6. Method according to any one of Claims 1 to 5, furthermore comprising, in the voice messaging server, a learning step for determining, over a predetermined number of connections to the voice messaging server by the audio terminal of the subscribed user, whether the latter uses an audio coder operating in the second predetermined frequency band more often than he uses an audio coder operating in the first predetermined frequency band.

7. Voice messaging server (VM) intended for the leaving of a voice message by an audio terminal (T_A) belonging to a user wishing to leave a voice message for the attention of another user who is subscribed to the aforementioned server, said server comprising at least two audio coders (CO1, CO2) which operate respectively in first and second predetermined frequency bands, the first frequency band being wider than the second frequency band and containing the latter, said server being **characterized in that** it comprises:
- means (MID, MAJ) of determination for determining, prior to the leaving of the voice message, whether an audio terminal belonging to the user subscribed to the voice messaging server normally uses at least one audio coder operating in the first predetermined frequency band or at least one audio coder operating in the second predetermined frequency band,
- means (MID) for identifying, during the leaving of the voice message by the audio terminal of the user wishing to leave said voice message, the audio coders liable to be used by said audio terminal of the user wishing to leave said voice message,
- selection means (MSL) for, if at least two identified audio coders operate respectively in the first and second predetermined frequency bands,
• selecting (SE3a) from the audio terminal of the user wishing to leave the voice message, the audio coder operating in the first predetermined frequency band, if the voice messaging server (VM) has previously determined that the audio terminal belonging to the subscribed user normally uses an audio coder operating in the first predetermined frequency band,
• selecting (SE3b; SE4) from the audio terminal of the user wishing to leave the voice message, the audio coder operating in the second frequency band if the voice messaging server (VM) has previously determined that the audio terminal belonging to the subscribed user normally uses an audio coder operating in the second predetermined frequency band,
- means (EBR) for recording the voice message left, in the coding format in accordance with the audio coder which has been selected from the audio terminal of the user wishing to leave the voice message.

8. Server according to Claim 7, in which the first predetermined frequency band is of WideBand type and the second predetermined frequency band is of Narrow Band type.

9. Server according to Claim 7 or Claim 8, in which the audio coder which is operating in the second predetermined frequency band and which is used by the audio terminal of the user wishing to leave a voice message is identical to the audio coder of the voice messaging server operating in the second predetermined frequency band.

10. Server according to Claim 7 or Claim 8, in which the audio coder which is operating in the second predetermined frequency band and which is used by the audio terminal of the user wishing to leave a voice message is different from the audio coder of the voice messaging server operating in the second predetermined frequency band.

11. Server according to any one of Claims 7 to 10, in which the means for determining prior to the leaving of the voice message, whether an audio terminal belonging to the user subscribed to the voice messaging server normally uses an audio coder operating in the first predetermined frequency band or an audio coder operating in the second predetermined frequency band, are adapted for analysing a list of audio coders liable to be used by the audio terminal of the subscribed user, said list having been dispatched to the voice messaging server by the audio terminal of the user subscribed to said server, upon connection of the audio terminal of the user subscribed to the voice messaging server, whatever the communication network used by the audio terminal of the subscribed user.

12. Server according to any one of Claims 7 to 11, furthermore comprising learning means (MAP) for determining, over a predetermined number of connections to the voice messaging server by the audio terminal of the subscribed user, whether the latter uses an audio coder operating in the second predetermined frequency band more often than he uses an audio coder operating in the first predetermined frequency band.

13. Computer program comprising instructions for implementing the method for leaving a voice message according to any one of Claims 1 to 6, when said leaving method is executed on a computer.

14. Recording medium readable by a computer on which is recorded a computer program comprising instructions for the execution of the steps of the method for leaving a voice message according to any one of Claims 1 to 6, when said program is executed by a computer.
